# EUROPÄISCHE PATENTSCHRIFT

(11) **EP 1 566 543 B1**
(45) Veröffentlichungstag und Bekanntmachung des Hinweises auf die Patenterteilung: **26.08.2009**
(21) Anmeldenummer: 05003010.5
(22) Anmeldetag: 12.02.2005
(51) Int. Cl.: F03D 11/00

(54) **Elastomerlagerung mit regulierbarer Steifigkeit**
Elastomeric bearing with adjustable stiffness
Palier élastomère à rigidité réglable

(30) Priorität: 18.02.2004 EP 04003579
(43) Veröffentlichungstag der Anmeldung: 24.08.2005
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- EP-A- 1 008 747
- US-A- 3 834 181
- US-A- 4 063 787
- US-A- 4 575 310

## Beschreibung

Die Erfindung betrifft eine hydraulisch oder mechanisch regulierbare Elastomerlagerung basierend auf entsprechend angeordneten Federelementen, deren Federsteifigkeit sich durch verformbare Elastomerkörper, bzw. Elastomerschichten individuell einstellen, beziehungsweise vorspannen lässt. Die Verformung der Elastomerschichten und damit der Federelemente wird erfindungsgemäß durch ein entsprechend gestaltetes Hydraulik- oder Kolbensystem erreicht. Die erfindungsgemäßen Elastomerlagerungen einschließlich ihrer Elastomerfederelemente sind insbesondere zur Verwendung in Zwei- oder Mehrpunktlagerungen bei Rotor- und Getriebekonstruktionen von großen Windkraftanlagen geeignet.

Elastische Federelemente sind bekannt und werden in vielen Bereichen der Technik vorrangig zur Dämpfung von Schwingungen und Kräften eingesetzt. Dabei hat das Federelement eine von der Art, Größe, Form und Anzahl der vorhandenen Elastomerschichten vorgegebene definierte Steifigkeit, die in der Regel nach Einbau des Federelementes nicht oder nicht wesentlich verändert werden kann.

Bei großen Windkraftanlagen mit Leistungen von mehr als 2 Megawatt werden häufig wegen der zum Teil sehr starken angreifenden Kräfte, insbesondere auf Rotorblätter und Rotorwelle, Vierpunktlagerungen eingesetzt, im Gegensatz zu den bei kleineren Anlagen üblicherweise eingesetzten Dreipunktlagerungen. Die Vierpunktlagerung hat zur Folge, dass die Rotorwelle mit dem Maschinenträger kardanisch fest verbunden und somit statisch unbestimmt ist. Die elastischen Lager (14) müssen somit das auf das Getriebe (1) wirkende Drehmoment übertragen. Das erzeugte Drehmoment erzeugt einen Verdrehungswinkel (18), welcher die zum Generator (19) führende und in der Regel außerhalb der Getriebemitte laufenden Gelenkwelle (20) mit verdreht. Damit dieser Verdrehungswinkel bei auf die Rotorblätter, bzw. die Rotorwelle angreifenden Kräften nicht zu groß wird, müssen die elastischen Lagerelemente (14) eine relativ große Steifigkeit aufweisen.
Treten nunmehr durch einwirkende Kräfte Verformungen des Maschinenträgers in vertikaler Richtung auf, also in eine Richtung, in der die elastomeren Federlemente eine hohe Federsteifigkeit aufweisen, so können die daraus resultierenden Kräfte nicht mehr ausreichend durch die Lager ausgeglichen werden, so dass Schäden am Getriebe der Windkraftanlage zur Folge sind.

Es stellt sich somit die Aufgabe, die Federsteifigkeit von entsprechenden Federelementen bzw. Lagerungen zu beeinflussen, so dass die beschriebenen bekannten Nachteile der entsprechenden Lagerungen des Standes der Technik nicht oder nur abgeschwächt auftreten.

Die Aufgabe wurde gelöst durch die Bereitstellung von neuartigen elastischen Federelementen, die aufgrund ihrer Konstruktion und Anordnung eine Lagerung abgeben, die aufgrund ihrer dynamischen Einstellbarkeit der Steifigkeit, sich den entsprechenden einwirkenden Kräften anpassen kann und so verhindert, dass Schäden an der Anlage, insbesondere am Getriebe entstehen.

Erfindungsgemäß wird hierbei Elastomermaterial durch Hydraulikflüssigkeit oder eine Kolbenkonstruktion, welche beide als Verdrängungselement fungieren, komprimiert, wodurch unmittelbar die gewünschte Einstellbarkeit der Steifigkeit der verwendeten Federelemente erreicht wird.

Im Gegensatz hierzu beschreibt die EP 1 008 7747 ein elastomeres Lager für ein Schwingungspendel, bei dem die Steifigkeit und damit das Dämpfungsverhalten des Elastomerbauteils weitestgehend durch Variation des Abstandes derselben oder durch Verwendung von Distanzscheiben reguliert werden kann. Dieses System kann durch klassische Hydraulikdämpfer, die ein eigenständiges Verdrängungselement bilden, ergänzt werden, die einen zusätzlichen Dämpfungseffekt bewirken sollen, ohne aber direkt auf die Steifigkeit der Elastomerbauteile bzw. ihre Regulierung selbst Einfluss nehmen zu können.

Gegenstand der Erfindung ist somit ein in seiner Steifigkeit einstellbares Federelement (14), welches im wesentlichen eine Anschlussplatte (1) und eine Endplatte (3) zwischen denen sich mindestens eine Elastomerschicht (4) befindet, umfasst, wobei die Anschlussplatte (1) eine Öffnung (9) mit einem Anschlussteil (26) aufweist, durch welche mittels eines Verdrängungselementes in Form einer hydraulischen Flüssigkeit (5) oder eines beweglichen Kolbenelementes (23, 27) Druck auf die Elastomerschicht (4) ausgeübt werden kann, und somit zu einer Veränderung der Federlänge (8) des Federelementes führt.

Gegenstand der Erfindung ist insbesondere ein in seiner Steifigkeit einstellbares Federelement (14), welches im wesentlichen eine Anschlussplatte (1) und eine Endplatte (3) umfasst, zwischen denen sich mindestens eine Elastomerschicht (4) befindet, und die Anschlussplatte (1) eine Öffnung (9) mit einem Anschlussteil (26) aufweist, durch welche ein Verdrängungselement in Form einer hydraulischen Flüssigkeit (5) die Elastomerschicht (4) unter Druck verformt und somit eine Änderung der Federlänge (8) des Federelementes bewirkt, wobei durch die Öffnung (9) des Anschlussteils (26) die hydraulischen Flüssigkeit (5) Zutritt zu der zwischen den Platten (1) und (2) befindlichen Elastomerschicht (4) erhält, welche mit den besagten Platten fest verbunden ist, jedoch nicht im Bereich des Anschlussteils auf der Anschlussplatte (1), so dass bei Zuführung besagter hydraulischer Flüssigkeit (5) in das Federelement durch hydraulisch erzeugten Druck die Elastomerschicht (4) von der Innenseite der Anschlussplatte weggedrückt wird. Dabei entsteht ein dem Flüssigkeitsvolumen entsprechenden Hohlraum (5a) im Inneren des Federelementes, der bei Abführung der Flüssigkeit (5) aus dem Federelement verschwindet, indem sich das Elastomerteil an die Anschlussplatte (1) andrückt.

In einer besonderen Ausführungsform weist die Anschlussplatte (1) eine Vertiefung (16) auf, in welcher die Elastomerschicht (4) eingebettet und mit ihr fest verbunden ist, so dass der bei Kompression entstehende und mit der hydraulischen Flüssigkeit gefüllte Hohlraum (5a) druckdicht abgeschlossen ist.

Gegenstand der Erfindung ist insbesondere auch in seiner Steifigkeit einstellbares Federelement (14), welches im wesentlichen eine Anschlussplatte (1) und eine Endplatte (3) umfasst, zwischen denen sich mindestens eine Elastomerschicht (4) befindet, und die Anschlussplatte (1) eine Öffnung (9) mit einem Anschlussteil (26) aufweist, durch welche ein Verdrängungselement in Form eines beweglichen Kolbenelementes die Elastomerschicht (4) unter Druck verformt und somit eine Änderung der Federlänge (8) des Federelementes bewirkt.

Hierbei besteht in einer Ausführungsform das bewegliche Kolbenelement im wesentlichen aus einem Druckkolben (23) mit Drückschraube (22), gegebenenfalls einer Hartschicht (24) (vorzugsweise eine Elastomerschicht mit hoher Shore-Härte) und einem Verdrängungselastomer (25), welches im direkten Kontakt steht mit der Elastomerschicht (4), wobei durch Betätigung der Drückschraube (23) die Elastomerschicht (4) über die Verformung des Verdrängungselastomers (25) komprimiert oder dekomprimiert wird.

In einer weiteren einfacheren Ausführungsform besteht das bewegliche Kolbenelement im wesentlichen aus einem Verdrängungsbolzen (27), welcher vorzugsweise eine abgerundete Kuppe besitzt und direkt durch Betätigung der Drückschraube (22) die Elastomerschicht (4) durch Eindringen in das Innere des Federelementes (14) komprimiert oder dekomprimiert, je nach dem die Drückschraube ein- oder ausgeschraubt wird.

Gegenstand der Erfindung sind ferner entsprechende Federelemente, bei denen sich zwischen der Anschlussplatte (1) und der Endplatte (3) mindestens eine Zwischenplatte (2) befindet, die eine oder mehrere Unterbrechungen oder Aussparungen aufweist, so dass die Elastomerschicht (4) an mindestens einer Stelle von besagte Anschlussplatte bis besagter Endplatte reicht. Vorzugsweise umfasst das Federelement ein oder zwei solcher Zwischenplatten (2), die eine mittige in der Verlängerung der Öffnung (9) befindliche Aussparung aufweisen, damit die durch den aufgewendeten Druck entstehende Verformung des Elastomermaterials leichter und gleichmäßiger weitergegeben wird. Vorzugsweise sind die Platten (1), (2) und (3) im wesentlichen rund oder rechteckig und um die Öffnung (9) und das Anschlussteil (26) zentral angeordnet.

Gegenstand der Erfindung ist weiterhin die Verwendung eines entsprechenden Federelementes in Lagerungen von Rotor- und oder Getriebebauteilen von Windkraftanlagen.

Gegenstand der Erfindung ist außerdem eine Zwei- oder Mehrpunktlagerung bestehend im wesentlichen aus zwei oder mehr jeweils gegenüberliegenden Lagerpunkten (21), in denen ein zu dämpfendes Maschinenteil gelagert ist, wobei jeder Lagerpunkt mindestens ein beschriebenes Federelement, vorzugsweise jedoch mindestens zwei solcher Elemente aufweist.

Gegenstand der Erfindung ist insbesondere eine entsprechende Zwei- oder Mehrpunktlagerung, bei der die Federelemente der gegenüberliegenden Lagerpunkte mit einander durch hydraulische Leitungen verbunden sind. Vorzugsweise ist jedes Federelement kreuzweise mit dem jeweils gegenüberliegenden Federelement des jeweils gegenüberliegenden Lagerpunktes durch eine hydraulische Leitung verbunden, so dass den in einem Lagerpunkt auftretenden Kräften durch Versteifung der Elastomerschicht in dem betreffenden Federelement des gegenüberliegenden Lagerpunktes entgegengewirkt wird.

Gegenstand der Erfindung ist schließlich die Verwendung einer entsprechenden Zwei- oder Mehrpunktlagerung zur Dämpfung von Schwingungen und Kräften durch dynamische Einstellbarkeit der Steifigkeit von Elastomerschichten in Lagerkomponenten.

Im folgenden wird die Erfindung näher beschrieben.
Die in den Abbildungen und der Beschreibung verwendeten Bezugsgrößen haben dabei die in der folgenden Tabelle niedergelegten Bezeichnungen:

| **Bezugsgröße** | **Bedeutung** |
|---|---|
| (1) | Anschlussplatte |
| (2) | Zwischenplatte |
| (3) | Endplatte |
| (4) | Elastomerschicht |
| (5) | Hydraulische Flüssigkeit |
| (5a) | Hohlraum für hydraulische Flüssigkeit |
| (6) | Elastomerkontur ungespannt |
| (7) | Ealstomerkontur gespannt |
| (8) | Federlänge |
| (9) | Öffnung für Anschlussteil (26) |
| (10) | Getriebe |
| (11) | Maschinenträger |
| (12) | Rotorwelle |
| (13) | Rotorlager |
| (14) | Federlement |
| (15) | Hydraulikleitung |
| (16) | Vertiefung (Hohlkörper) |
| (17) | Rotordrehmoment |
| (18) | Verdrehungswinkel |
| (19) | Generator |
| (20) | Gelenkwelle |
| (21) | Lagerpunkt (bestehend aus mindestens zwei gegenüberliegenden Federelementen) |
| (22) | Drückschraube |
| (23) | Druckkolben, flach |
| (24) | Elastomerschicht, hochshorig |
| (25) | Verdrängungselastomer |
| (26) | Anschlussteil: Anschlussstutzen, Führung |
| (27) | Verdrängungsbolzen |

Kurze Beschreibung der gezeigten Abbildungen:

| | |
|---|---|
| Abb. 1 | Längsschnitt durch ein zylindrisch gestaltetes elastomeres Federelement gemäß der Erfindung im nicht vorgespannten Zustand (Elastomer unkomprimiert) |
| Abb. 2 | Längsschnitt durch ein zylindrisch gestaltetes elastomeres Federelement gemäß der Erfindung im vorgespannten Zustand (Elastomer komprimiert), einen Hohlraum (5) aufweisende der durch Hydraulikflüssigkeit gefüllt ist. |
| Abb. 3 | Teilbild 3a zeigt eine Draufsicht einer Vierpunktlagerung einer Rotor-/Getriebe/Generator-Vorrichtung einer Windkraftanlage; |
| | Teilbild 3b zeigt einen Querschnitt durch die Lagerung von Abb. 2, inklusive zweier Hydraulikleitungen; Teilbild 3c zeigt den gleichen Ausschnitt wie 3a, jedoch mit vergrößerten Federelementen gemäß der Erfindung. |
| Abb. 4 | 3D-Darstellung eines erfindungsgemäßen Federelementes mit flachem Druckkolben (23), hochshoriger Elastomerschicht (24) Verdrängungselastomer und Drückschraube (22), welche in einem Anschlussteil (26) geführt werden. |
| Abb. 5 | 3D-Darstellung eines erfindungsgemäßen Federelementes mit einem mit abgerundeter Kuppe versehenen Druckkolben (27) (Verdrängungsbolzen) und Drückschraube (22), welche in einem Anschlussteil (26) geführt werden. |

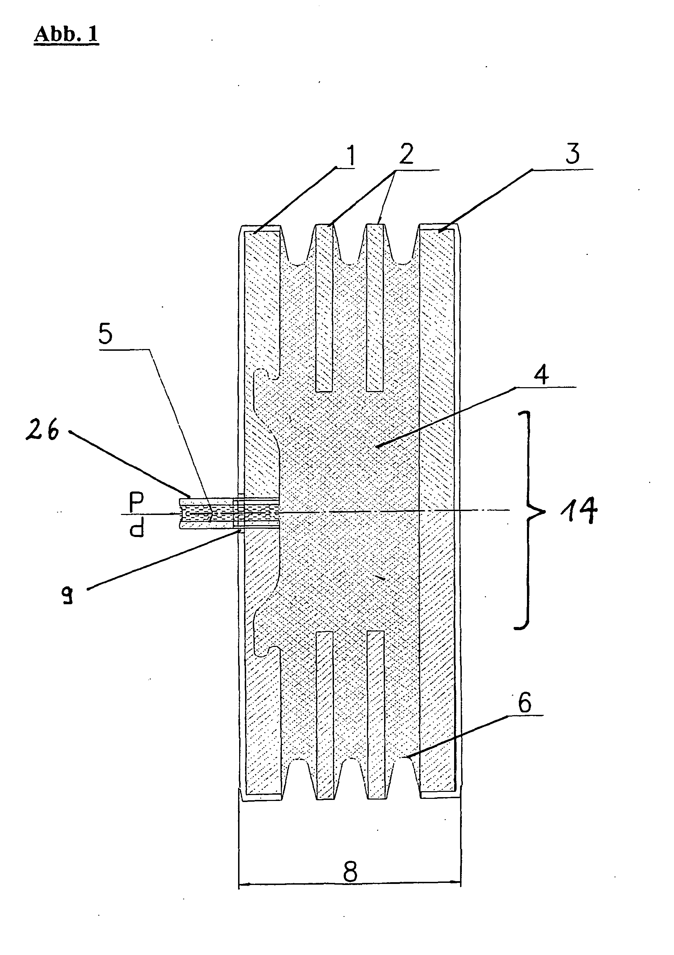

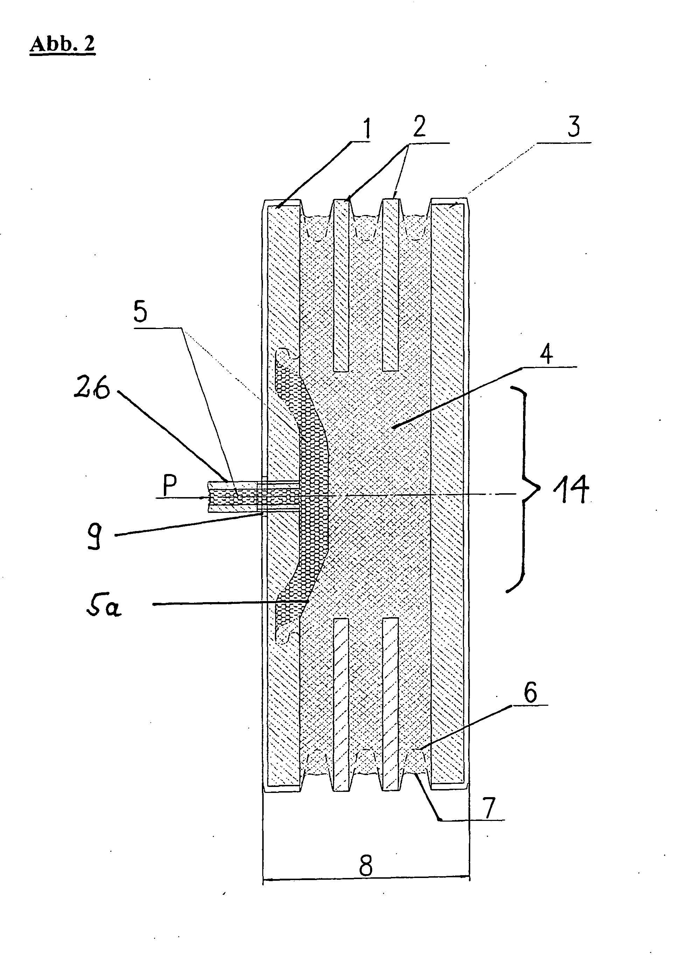

Ein typisches Federelement gemäß der Erfindung ist in Abb. 1 und 2 dargestellt. Hierbei wird die Verformung der Elastomerschicht (4) durch hydraulisch erzeugten Druck bewirkt.

Das Federelement ist in diesen Ausführungsformen vorzugsweise als ein im Querschnitt rundes oder rechteckiges Bauelement ausgestaltet, kann aber auch andere Formen und Gestalt annehmen. Abb. 1 zeigt eine hier runde Anschlussplatte (1), welche vorzugsweise eine umlaufende, vorzugsweise ringförmige Vertiefung oder Ausbuchtung (16) vorzugsweise in einem Nasenprofil oder ähnlicher Form, aufweist. Zentrisch hierzu angeordnet, befindet sich eine Bohrung (9), die durch besagte Anschlussplatte geht und mit einem Anschlussteil (26) hier in Form eines Anschlussstutzens versehen ist. Der Stutzen und die Bohrung dienen zum Einbringen von Hydraulikflüssigkeit in das Innere des Federelementes durch entsprechenden (Hydraulik-) Druck.

Zwischen der Anschlussplatte (1) und der Abschluss- oder Endplatte (3) befindet sich eine Elastomerschicht (4) mit einer Dicke zwischen ungefähr 0.5 und 5.0 cm. Die Elastomerschicht ist fest mit den Platten (1) und (3) und gegebenenfalls mit den Zwischenplatten (2) verbunden, mit Ausnahme eines Bereiches, der sich von dem zentralen Anschlussteil (26), bzw. Anschlussstutzen bis hin zu der umlaufenden Ausbuchtung (16) erstreckt. In diesem Bereich liegt die Elastomerschicht (im unkomprimierten Zustand) an der Innenwand der Anschlussplatte (1) lediglich an.

Die Elastomerschicht kann gegebenenfalls teilweise unterbrochen sein durch eine oder mehrere, vorzugsweise ein bis drei, Zwischenplatten (2), die selbst vorzugsweise mittige Unterbrechungen bzw. Aussparungen aufweisen, so dass sich die Elastomerschicht (4) zumindest an einer Stelle durchgehend von Platte (1) bis Platte (3) erstreckt.

Die Unterbrechungen in den Zwischenplatten können zweckmäßigerweise gleich oder unterschiedlich große Bohrungen sein. Vorzugsweise sind die Zwischenplatten (2) in Form von breiten Ringplatten gestaltet, deren Mittelpunkt sich vorzugsweise auf Höhe der Öffnung (9) bzw. des daran befindlichen Anschlussstutzens (26) befindet, wobei die Größe der Ringöffnung etwa dem Teil der nicht anliegenden Elastomerschicht (4) entspricht und diesem gegenüber liegt.

Im Randbereich weist die Elastomerschicht zwischen den Platten konkave bzw. konvexe Konturen auf, die sich je nach Komprimierungszustand ändern können. Außer in dem bereits genannten Bereich um den Anschlussstutzen herum ist die Elastomerschicht mit den beteiligten Rand- und Zwischenplatten beispielsweise durch Verklebung oder Vulkanisierung fest verbunden.

Abbildung 2 zeigt die gleiche Elastomerfeder jedoch im komprimierten Zustand.

Die Komprimierung wird erreicht, indem hydraulische Flüssigkeit (5) durch die Öffnung (9) bzw. den Anschlussstutzen (26) in das Innere des Federelementes gepresst wird. Hierdurch wird die Elastomerschicht (4) im Bereich zwischen dem Stutzen (26) und der Vertiefung (16) angehoben und von der Anschlussplatte (1) weggepresst, so dass zwischen dem Elastomer und der Platte (1) ein Hohlraum (5a) entsteht, der mit Hydraulikflüssigkeit (5) gefüllt ist. Hierdurch wird das Volumen der Feder vergrößert, was entweder die Federlänge (8) erhöht, oder bei anstehender Last auf die Feder die nicht gespannte Kontur (6) auf die gespannte Kontur (7) vergrößert. Insgesamt steigt mit zunehmendem Druck in der Hydraulikleitung die Federsteifigkeit der Elastomerfeder. Federlänge und Federsteifigkeit sind somit einstellbar.

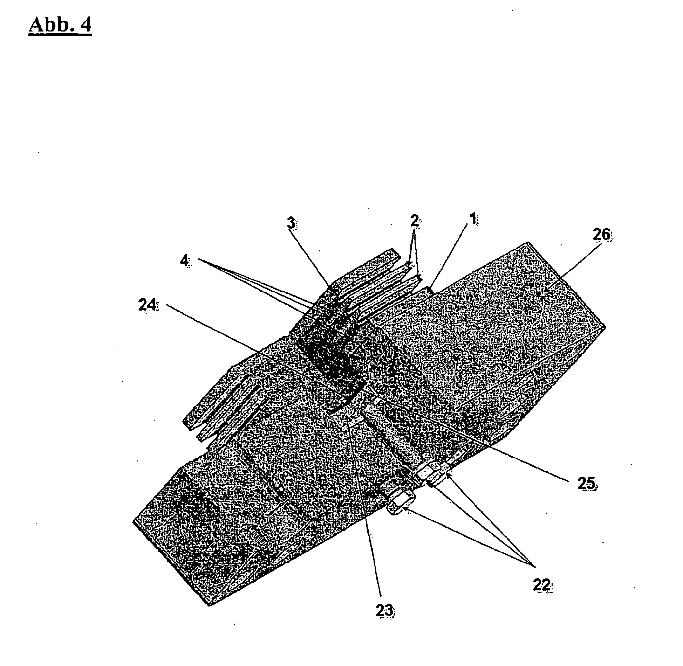

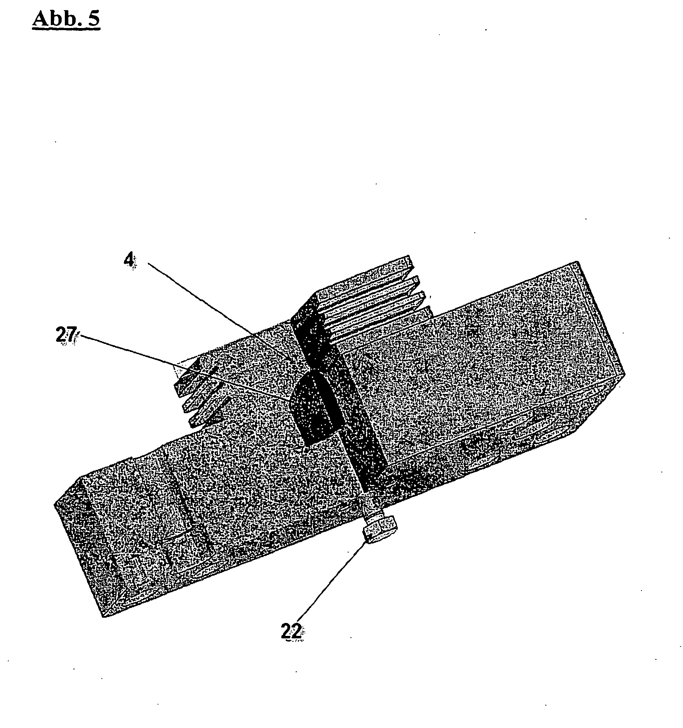

In einer anderen Ausführungsform der Erfindung wird die Verformung der Elastomerschicht (4) im Inneren des Federelementes (14) nicht durch hydraulischen Druck sondern durch Druck, welcher von beweglichen Kolben (23, 27) unterschiedlicher Gestaltung und Ausstattung erzeugt wird, bewirkt. Abbildungen 4 und 5 zeigen Beispiele der erfindungsgemäßen Kolbensysteme.

In Abb. 4 wird die Federlänge (8) des Feder- bzw. Lagerelements (14) durch Einpressen eines weiteren so genannten Verdrängungselastomers (25) in den elastomeren Bereich (4) des Federelementes verändert.
Hierzu befindet sich in dem Anschlussteil (26) eine Bohrung, welche einen Druckkolben (23) und das besagte Verdrängungselastomer (25) aufnimmt. Der Druckkolben, der vorzugsweise aus Kunststoff oder Metall besteht, wird durch eine oder mehrere Drückschrauben (22) betätigt und schiebt das Elastomerelement (25) gegen die Elastomerschichten (4) im Bereich der Öffnung (9) des Federelementes, bzw. dringt bei Druckausübung durch die Öffnung in das Federelement ein. Dadurch werden die Elastomerschichten (4) verdrängt und die Federlänge des Federelements erhöht sich, bzw. wird - wenn es eingespannt ist- stärker vorgespannt.
Im Vergleich zu der oben beschriebenen hydraulischen Ausführungsform wird hier das eingepresste Hydrauliköl durch das eingepresste Elastomermaterial (25) ersetzt.

In einer anderen einfacheren Ausführungsform (Abb. 5) wird ein Verdrängungsbolzen (27) direkt in das vorhandene Elastomer (4) des Federelementes eingepresst, welches dadurch verdrängt und wie oben beschrieben verdichtet wird. Der Verdrängungsbolzen wird ebenfalls in einer Bohrung des Anschlussteils (26) geführt und mit Hilfe der Drückschraube (22) in das Federelement hinein- oder aus ihm herausgedreht.

Die erfindungsgemäß für die Bauteile (4) und (25) verwendeten Elastomermaterialien bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt. Für die Hartschicht (24) wird erfindungsgemäß ebenfalls ein Elastomermaterial verwendet, welches aber eine hohe Shore-Härte aufweisen sollte. Es sind aber auch andere gleich wirkende Materialen einsetzbar.

Die nicht-elastomeren Zwischenplatten (2) sind erfindungsgemäß aus weitestgehend unelastischen Werkstoffen mit geringer Kompressibilität gefertigt. Vorzugsweise sind dies Metallbleche, aber auch andere Materialien, wie harte Kunststoffe, Verbundwerkstoffe oder karbonfaserhaltige Werkstoffe sind einsetzbar. Die Zwischenbleche und die Elastomermaterialien (4) werden in der Regel durch Vulkanisierung miteinander verbunden.

Wie bereits erwähnt, sind die beschriebenen erfindungsgemäßen Federelemente besonders geeignet für einen Einsatz als Lagerpunkte in Zwei- oder Mehrpunktlagerungen, vorzugsweise in Windkraftanlagen.

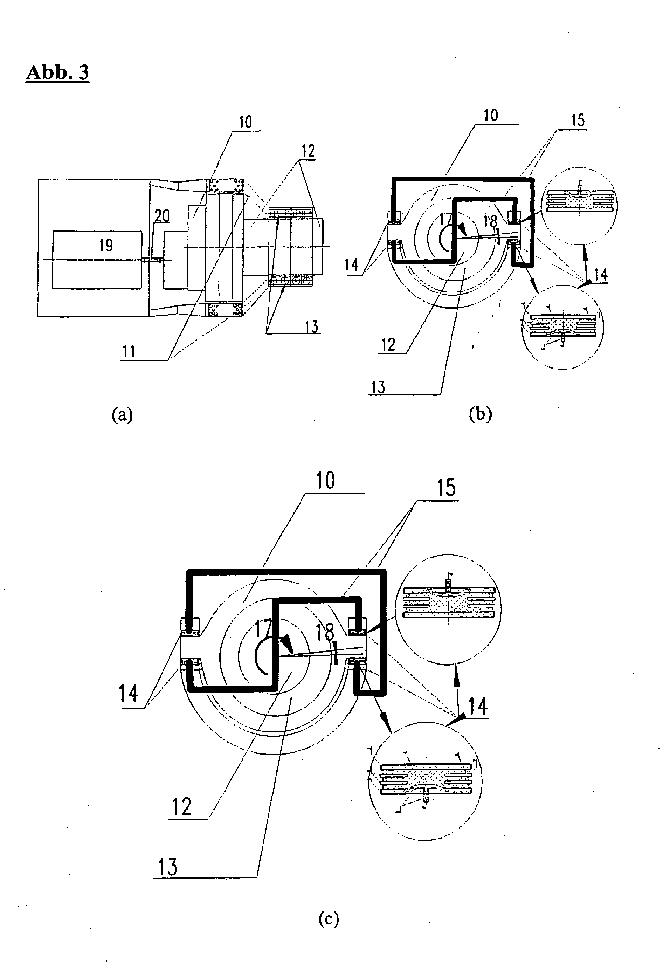

Abbildung 3 zeigt verschiedene Darstellungen (a, b, c) der erfindungsgemäßen Zwei- oder Mehrpunktlagerungen, welche auf den beschriebenen Elastomerfedern basieren. Ein Lagerpunkt (21) umfasst vorzugsweise zwei Elastomerfeder-Systeme, die das zu lagernde Maschinenteil in einem Punkt halten (z.B. oben und unten). Ein solches Elastomerfeder-System besteht vorzugsweise aus einer erfindungsgemäßen Elastomerfeder, kann aber auch aus einer ganzen Anordnung von entsprechend angeordneten Federn bestehen.
Bei der im Bild dargestellten hydraulisch geregelten Zweipunktlagerung sind zwei Lagerpunkte mit je zwei Elastomerfedern verwendet. Die beiden Lagerpunkte sind durch hydraulische Leitungen miteinander verbunden, und zwar in der Weise, dass die eine Elastomerfeder des einen Lagerpunktes mit der gegenüberliegenden Elastomerfeder des anderen gegenüberliegenden Lagerpunktes verbunden ist (kreuzweise Verbindung). Wird nun in einem Lagerpunkt die Elastomerschicht durch einwirkende Kräfte aus dem Maschinenbereich zusammengepresst, geschieht zwangsläufig, dass hydraulische Flüssigkeit durch die entsprechende Leitung in das mit ihr verbundene Federelement des gegenüberliegenden Lagerpunktes gepresst wird und hier deren Elastomerschicht komprimiert. Hierdurch kann eine optimale Steifigkeitsregulierung und somit Dämpfung erfolgen.

## Patentansprüche

1. In seiner Steifigkeit einstellbares Federelement (14) mit einer Anschlussplatte (1) und einer Endplatte (3), zwischen denen sich mindestens eine Elastomerschicht (4) befindet, und die Anschlussplatte (1) eine Öffnung (9) mit einem Anschlussteil (26) aufweist, durch welche ein Verdrängungselement die Elastomerschicht (4) unter Druck verformt und somit eine Änderung der Federlänge (8) des Federelementes bewirkt, **dadurch gekennzeichnet dass** entweder (i) das Verdrängungselement in Form einer hydraulischen Flüssigkeit (5) durch die Öffnung (9) des Anschlussteils (26) Zutritt zu der zwischen den Platten (1) und (2) befindlichen Elastomerschicht (4) erhält, welche mit den besagten Platten fest verbunden ist, jedoch nicht im Bereich des Anschlussteils auf der Anschlussplatte (1), so dass bei Zuführung besagter hydraulischer Flüssigkeit (5) in das Federelement durch hydraulisch erzeugten Druck die Elastomerschicht (4) von der Innenseite der Anschlussplatte weggedrückt wird, so dass ein dem Flüssigkeitsvolumen entsprechenden Hohlraum (5a) im Inneren des Federelementes entsteht, der bei Abführung der Flüssigkeit (5) aus dem Federelement verschwindet, indem sich das Elastomerteil an die Anschlussplatte (1) andrückt, oder (ii) dass das Verdrängungselement ein bewegliches Kolbenelement (23, 27) ist.

2. Federelement nach Anspruch 1, **dadurch gekennzeichnet, dass** die Anschlussplatte (1) eine Vertiefung (16) aufweist, in welcher die Elastomerschicht (4) eingebettet und mit ihr fest verbunden ist, so dass der bei Kompression entstehende und mit der hydraulischen Flüssigkeit gefüllte Hohlraum (5a) druckdicht abgeschlossen ist.

3. Federelement gemäß Anspruch 1, **dadurch gekennzeichnet, dass** im Fall (ii) das bewegliche Kolbenelement im wesentlichen aus einem Druckkolben (23) mit Drückschraube (22), und einem Verdrängungselastome.r (25) besteht, welches im direkten Kontakt mit der Elastomerschicht (4) im Inneren des Federelementes steht, wobei durch Betätigung der Drückschraube (22) die Elastomerschicht (4) über die Verformung des Verdrängungselastomers (25) komprimiert oder dekomprimiert wird.

4. Federelement nach Anspruch 1, **dadurch gekennzeichnet, dass** das bewegliche Ko1benelement im wesentlichen aus einem Verdrängungsboizen (27) besteht, welcher direkt durch Betätigung der Druckschraube (22) in die Elastomerschicht (4) im Inneren des Federelementes (14) eindringt und diese komprimiert oder dekomprimiert.

5. Federelement nach einem der Ansprüche 1 -- 4, **dadurch gekennzeichnet, dass** sich zwischen der Anschlussplatte (1) und der Endplatte (3) mindestens eine Zwischenplatte (2) befindet, welche eine oder mehrere Aussparungen aufweiset, so dass die Elastomerschicht (4) an mindestens einer Stelle von besagte Anschlussplatte bis besagter Endplatte reicht.

6. Federelement nach Anspruch 5, **dadurch gekennzeichnet, dass** es ein oder zwei Zwischenplatten (2) umfasst, die eine mittige in der Verlängerung der Öffnung (9) befindliche Aussparung aufweisen.

7. Federelement nach einem der Ansprüche 1-6, **dadurch gekennzeichnet, dass** die Platten (1), (2) und (3) im wesentlichen rund oder rechteckig sind und die Öffnung (9) zentral angeordnet ist.

8. Verwendung eines Federelementes nach einem der Ansprüche 1 bis 7 in Lagerungen von Rotor- und oder Getriebebauteilen von Windkraftanlagen.

9. Zwei- oder Mehrpunktlagerung bestehend im wesentlichen aus zwei oder mehr jeweils gegenüberliegenden Lagerpunkten (21), in denen ein zu dämpfendes Maschinenteil gelagert ist, **dadurch gekennzeichnet, dass** jeder Lagerpunkt mindestens ein Federelement gemäß der Ansprüche 1 bis 7 aufweist.

10. Zwei- oder Mehrpunktlagerung nach Anspruch 9, **dadurch gekennzeichnet, dass** die Federelemente hydraulische Federelemente sind und die gegenüberliegenden Lagerpunkte mit einander durch hydraulischen Leitungen verbunden sind.

11. Zwei- oder Mehrpunktlagerung nach Anspruch 10, **dadurch gekennzeichnet, dass** jeder Lagerpunkt mindestens zwei gegenüberliegende Federelemente (14) aufweist, wobei jedes Federelement kreuzweise mit dem jeweils gegenüberliegenden Federelement des jeweils gegenüberliegenden Lagerpunktes durch eine hydraulische Leitung verbunden ist, so dass in einem Lagerpunkt auftretenden Kräften durch Versteifung der Elastomerschicht in dem betreffenden Federelement des gegenüberliegenden Lagerpunktes entgegengewirkt wird.

12. Verwendung einer Zwei- oder Mehrpunktlagerung nach Anspruch 10 oder 11 zur Dämpfung von Schwingungen und Kräften in Lagern.

## Claims

1. Spring element (14) of adjustable stiffness having a connection plate (1) and an end plate (3), between which at least one elastomer layer (4) is located, and the connection plate (1) has an aperture (9) having a connection part (26), through which a displacement element deforms the elastomer layer (4) under pressure and thus effects a change in the spring length (8) of the spring element, **characterized in that** either (i) the displacement element in the form of a hydraulic liquid (5) gains access through the aperture (9) of the connection part (26) to the elastomer layer (4) which is located between the plates (1) and (2) and which is firmly connected to the said plates, but not in the region of the connection part on the connection plate (1), so that, when said hydraulic liquid (5) is fed into the spring element by hydraulically generated pressure, the elastomer layer (4) is forced away from the inside of the connection plate, so that a cavity (5a) corresponding to the liquid volume forms in the interior of the spring element and disappears on discharge of the liquid (5) from the spring element through the elastomer part pressing against the connection plate (1), or (ii) the displacement element is a movable piston element (23, 27).

2. Spring element according to Claim 1, **characterized in that** the connection plate (1) has a recess (16) in which the elastomer layer (4) is embedded and to which it is firmly connected, so that the cavity (5a) which forms on compression and is filled with the hydraulic liquid is sealed in a pressure-tight manner.

3. Spring element according to Claim 1, **characterized in that**, in case (ii), the movable piston element essentially consists of a ram (23) with pressure screw (22), and a displacement elastomer (25) which is in direct contact with the elastomer layer (4) in the interior of the spring element, where actuation of the pressure screw (22) causes compression or decompression of the elastomer layer (4) via deformation of the displacement elastomer (25).

4. Spring element according to Claim 1, **characterized in that** the movable piston element essentially consists of a displacement bolt (27) which penetrates directly into the elastomer layer (4) in the interior of the spring element (14) by actuation of the pressure screw (22) and compresses or decompresses the elastomer layer (4).

5. Spring element according to one of Claims 1-4, **characterized in that** at least one intermediate plate (2) which has one or more cut-outs, so that the elastomer layer (4) extends as far as the end plate (3) at at least one point of the connection plate (1), is located between said connection plate and said end plate.

6. Spring element according to Claim 5, **characterized in that** it comprises one or two intermediate plates (2) which have a central cut-out located in the extension of the aperture (9).

7. Spring element according to one of Claims 1-6, **characterized in that** the plates (1), (2) and (3) are essentially round or rectangular, and the aperture (9) is arranged centrally.

8. Use of a spring element according to one of Claims 1 to 7 in bearings of rotor and/or gearbox components of wind turbines.

9. Two- or multipoint bearing essentially consisting of two or more bearing points (21) which are opposite one another and in which a machine part to be damped is borne, **characterized in that** each bearing point has at least one spring element according to Claims 1 to 7.

10. Two- or multipoint bearing according to Claim 9, **characterized in that** the spring elements are hydraulic spring elements and the opposite bearing points are connected to one another by hydraulic lines.

11. Two- or multipoint bearing according to Claim 10, **characterized in that** each bearing point has at least two opposite spring elements (14), where each spring element is connected crosswise to the respective opposite spring element of the respective opposite bearing point by a hydraulic line, so that forces arising in a bearing point are countered by stiffening of the elastomer layer in the relevant spring element of the opposite bearing point.

12. Use of a two- or multipoint bearing according to Claim 10 or 11 for damping vibrations and forces in bearings.

## Revendications

1. Elément de ressort (14) de raideur réglable ayant une plaque de connexion (1) et une plaque d'extrémité (3), entre lesquelles au moins une couche en élastomère (4) est située, et la plaque de connexion (1) a une ouverture (9) ayant une partie de connexion (26), au travers de laquelle un élément de déplacement déforme la couche en élastomère (4) sous la pression et effectue ainsi un changement dans la longueur de ressort (8) de l'élément de ressort, **caractérisé en ce que** soit (i) l'élément de déplacement sous la forme d'un liquide hydraulique (5) provoque un accès au travers de l'ouverture (9) de la partie de connexion (26) jusqu'à la couche en élastomère (4) qui est située entre les plaques (1) et (2) et qui est fermement connectée auxdites plaques, mais pas dans la région de la partie de connexion sur la plaque de connexion (1), de telle sorte que, lorsque ledit liquide hydraulique (5) est alimenté dans l'élément de ressort par une pression générée hydrauliquement, la couche en élastomère (4) est forcée vers l'extérieur depuis l'intérieur de la plaque de connexion, de telle sorte qu'une cavité (5a) correspondant au volume de liquide se forme dans l'intérieur de l'élément de ressort et disparaît lors de la décharge du liquide (5) depuis l'élément de ressort au travers de la partie en élastomère pressant contre la plaque de connexion (1), soit (ii) l'élément de déplacement est un élément de piston déplaçable (23, 27).

2. Elément de ressort selon la revendication 1, **caractérisé en ce que** la plaque de connexion (1) a un évidement (16) dans lequel la couche en élastomère (4) est logée et sur lequel il est connecté fermement, de telle sorte que la cavité (5a) qui se forme suite à la compression et qui est remplie avec le liquide hydraulique est scellée d'une manière étanche à pression.

3. Elément de ressort selon la revendication 1, **caractérisé en ce que**, dans le cas (ii), l'élément de piston déplaçable est constitué essentiellement d'un coulisseau (23) avec une vis de pression (22), et un élastomère de déplacement (25) qui est en contact direct avec la couche en élastomère (4) dans l'intérieur de l'élément de ressort, dans lequel l'actionnement de la vis de pression (22) provoque la compression ou la décompression de la couche en élastomère (4) via la déformation de l'élastomère de déplacement (25).

4. Elément de ressort selon la revendication 1, **caractérisé en ce que** l'élément de piston déplaçable est constitué essentiellement d'un boulon (27) qui pénètre directement dans la couche en élastomère (4) dans l'intérieur de l'élément de ressort (14) en actionnant la vis de pression (22) et qui comprime ou décomprime la couche en élastomère (4).

5. Elément de ressort selon l'une des revendications 1 - 4, **caractérisé en ce qu'**au moins une plaque intermédiaire (2) qui présente une ou plusieurs découpes, de telle sorte que la couche en élastomère (4) s'étende aussi loin que la plaque d'extrémité (3) au niveau d'au moins un point de la plaque de connexion (1), est située entre ladite plaque de connexion et ladite plaque d'extrémité.

6. Elément de ressort selon la revendication 5, **caractérisé en ce qu'**il comprend une ou deux plaques intermédiaires (2) qui présentent une découpe centrale située dans l'extension de l'ouverture (9).

7. Elément de ressort selon l'une des revendications 1 - 6, **caractérisé en ce que** les plaques (1), (2) et (3) sont essentiellement rondes ou rectangulaires, et l'ouverture (9) est agencée centralement.

8. Utilisation d'un élément de ressort selon l'une des revendications 1 à 7 dans des paliers de composants de rotor et/ou de boîte de vitesses d'éoliennes.

9. Palier en deux points ou multipoint constitué essentiellement de deux points de palier ou plus (21) qui sont opposés l'un à l'autre et dans lequel une partie de machine à amortir est supportée, **caractérisé en ce que** chaque point de palier comprend au moins un élément de ressort selon les revendication 1 à 7.

10. Palier en deux points ou multipoint selon la revendication 9, **caractérisé en ce que** les éléments de ressort sont des éléments de ressort hydrauliques et les points de palier opposés sont connectés l'un à l'autre par des lignes hydrauliques.

11. Palier en deux points ou multipoint selon la revendication 10, **caractérisé en ce que** chaque point de palier comprend au moins deux éléments de ressort opposés (14), dans lequel chaque élément de ressort est connecté transversalement à l'élément de ressort opposé respectif du point de palier opposé respectif par une ligne hydraulique, de telle sorte que les forces apparaissant dans un point de palier sont contrées par le raidissement de la couche en élastomère dans l'élément de ressort correspondant du point de palier opposé.

12. Utilisation d'un palier en deux points ou multipoint selon la revendication 10 ou 11 pour amortir les vibrations et les forces dans des paliers.
